# EUROPEAN PATENT APPLICATION

(11) **EP 4 583 189 A1**
(43) Date of publication of application: **09.07.2025**
(21) Application number: 23860371.6
(22) Date of filing: 29.08.2023
(51) Int. Cl.: H01M 4/133, H01M 4/134, H01M 4/36, H01M 4/38, H01M 4/48, H01M 4/587, H01M 4/62, H01M 4/66

(54) **NEGATIVE ELECTRODE AND BATTERY**

(30) Priority: 01.09.2022 JP 2022139483
(71) Applicant: Vehicle Energy Japan Inc., Ibaraki 312-8505 (JP)
(72) Inventor: INABA, Akira, Hitachinaka-shi, Ibaraki 312-8505 (JP); MIKI, Takeshi, Hitachinaka-shi, Ibaraki 312-8505 (JP)
(74) Representative: Strehl & Partner mbB
(86) International application number: PCT/JP2023/031325
(87) International publication number: WO 2024/048609

(57) **Abstract**

The present disclosure relates to a negative electrode including a current collector layer, a first active material layer bonded to the current collector layer, and a second active material layer bonded to the first active material layer, and a battery including the negative electrode. In the negative electrode, the first active material layer includes a first graphite; and a first silicon simple substance or silicon compound of 1 wt% or more and 90 wt% or less with respect to the total weight of the first active material layer. Further, in the negative electrode, the second active material layer includes a second graphite having an average particle diameter smaller than that of the first graphite; and a second silicon simple substance or silicon compound having an average particle diameter of 0 wt% or more and less than 1 wt% with respect to the total weight of the second active material layer. Thus, the durability of the battery can be improved.

## Description

### Technical Field

The present disclosure relates to a negative electrode and a battery.

### Background Art

Conventionally, a battery having a negative electrode including a plurality of active material layers has been known (see, for example, Patent Literatures 1 to 6).

### Citation List

### Patent Literature

[Patent Literature 1] International Publication WO 2011/114433
[Patent Literature 2] Japanese Patent Application Laid-Open No. 2009-009858
[Patent Literature 3] Japanese Patent Application Laid-Open No. 2013-246900
[Patent Literature 4] Japanese Patent Application Laid-Open No. 2014-229581
[Patent Literature 5] Japanese Patent Application Laid-Open No. 2015-187926
[Patent Literature 6] Japanese Patent Application Laid-Open No. 2019-185920

### Summary of Invention

### Technical Problem

There is a demand for improving the durability of a battery in which SiO is mixed in an active material layer of a negative electrode developed to increase the capacity of the battery.

### Solution to Problem

The negative electrode of the present disclosure includes a current collector layer, a first active material layer bonded to the current collector layer, and a second active material layer bonded to the first active material layer. The first active material layer includes a first graphite and a first silicon simple substance or silicon compound of 1 wt% or more and 90 wt% or less with respect to the total weight of the first active material layer. The second active material layer includes a second graphite having an average particle diameter smaller than that of the first graphite, and a second silicon simple substance or silicon compound having an average particle diameter of 0 wt% or more and less than 1 wt% with respect to the total weight of the second active material layer.

A battery of the present disclosure includes the negative electrode, a positive electrode, and an electrolyte.

### Advantageous Effects of Invention

According to the battery including the negative electrode of the present disclosure, the durability of the battery is improved.

### Brief Description of Drawings

Figure 1 is a perspective view showing a battery 1 according to an embodiment.
Figure 2 is a perspective view showing a charge/discharge body 100 included in the battery 1.
Figure 3 is a perspective view showing a portion including the positive electrode tab 111b and the negative electrode tab 121b of the charge/discharge body 100 in Figure 2, in which the positions of the side ends of the positive electrode 110, the negative electrode 120, and the separator 130 are different.
Figure 4 is a side view showing the charge/discharge body 100 of Figure 3.
Figure 5 is a schematic enlarged view of a portion of a die head and a back roller used for manufacturing a negative electrode.
Figure 6 is a schematic cross-sectional view of a positive electrode and a negative electrode of a separatorless battery including a positive electrode and a negative electrode of another example according to the embodiment.
Figure 7 is a schematic enlarged cross-sectional view of an interface and the vicinity thereof between a positive electrode second active material layer and a positive electrode electronic insulation layer of a positive electrode active material layer of a positive electrode of another example according to the embodiment.

### Description of Embodiments

Each embodiment of the present disclosure will be described with reference to the drawings. To facilitate understanding of each embodiment, the size and ratio of components may be exaggerated in each drawing. In the drawings, the same reference numerals are given to the same components. In the drawings, a lateral width direction X (X-axis direction), a depth direction Y (Y-axis direction), and a height direction Z (Z-axis direction) of the constituent members of the battery 1 and the battery 1 are indicated by arrows. In each of the drawings, the lateral width direction X, the depth direction Y, and the height direction Z indicate relative direction relationships. That is, for example, in a case where the battery 1 is rotated by 180 degrees and the upper surface and the lower surface are reversely rotated, or in a case where the battery 1 is rotated by 90 degrees and the upper surface is arranged as a side surface, the lateral width direction X, the depth direction Y, and the height direction Z of the battery 1 change.

### (Configuration of Battery 1 Including Negative Electrode 120 of Embodiment)

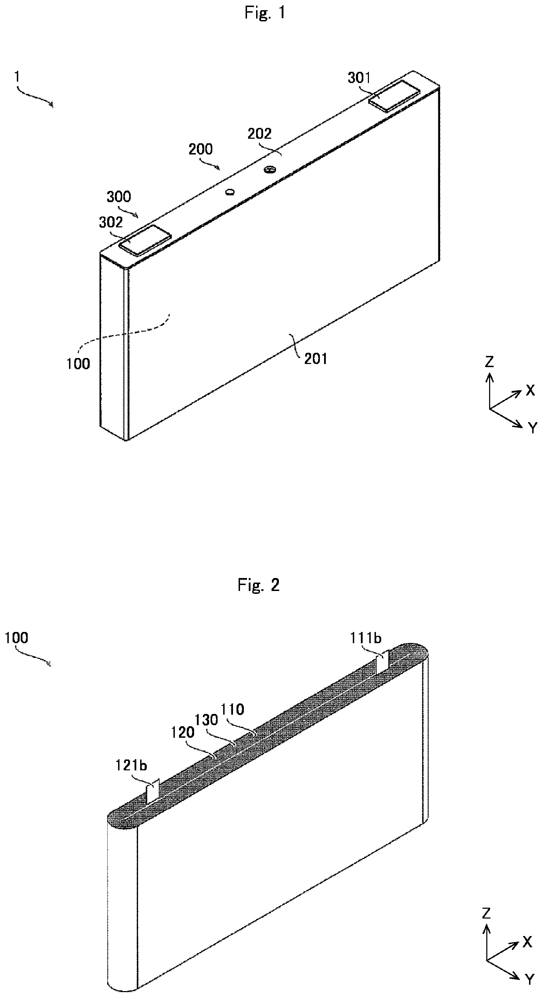

A configuration of the battery 1 including the negative electrode 120 according to the embodiment will be described with reference to Figures 1 to 4.

As shown in Figure 1, the battery 1 includes a charge/discharge body 100 in which electric power is charged and discharged, a container 200 which contains the charge/discharge body 100, and an external terminal 300 connected to the charge/discharge body 100 and attached to the container 200.

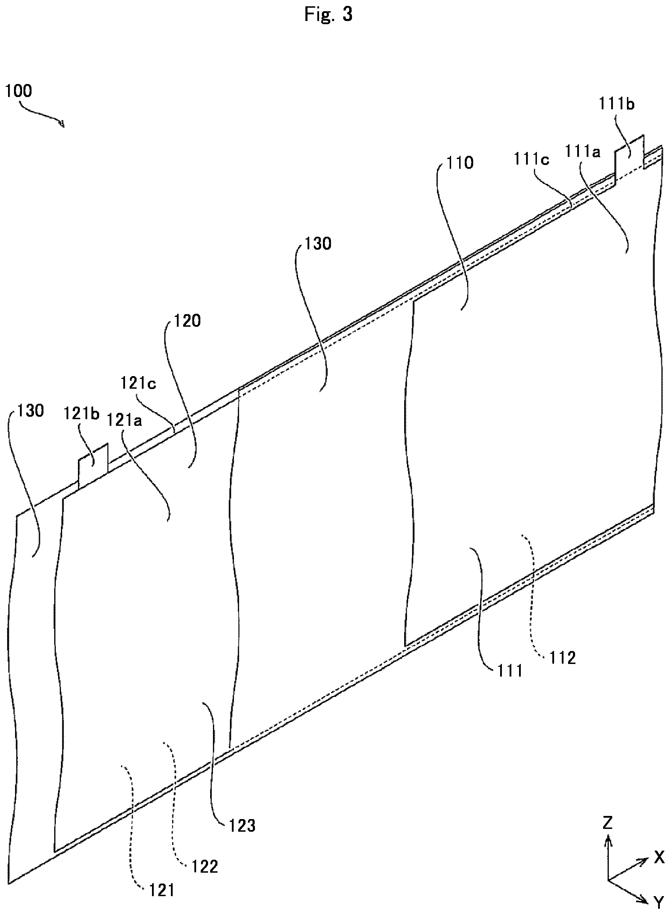

As illustrated in Figures 2 to 4, the charge/discharge body 100 includes a positive electrode 110, a negative electrode 120, and a separator 130. The charge/discharge body 100 impregnates the separator 130 with an electrolyte in a state of being contained in the container 200. As shown in Figures 2 and 3, the charge/discharge body 100 is configured by winding a positive electrode 110 formed in an elongated shape and a negative electrode 120 formed in an elongated shape through a separator 130 formed in an elongated shape. The charge/discharge body 100 is formed in a rectangular parallelepiped shape in which both end portions are rounded in a state in which the constituent members are wound.

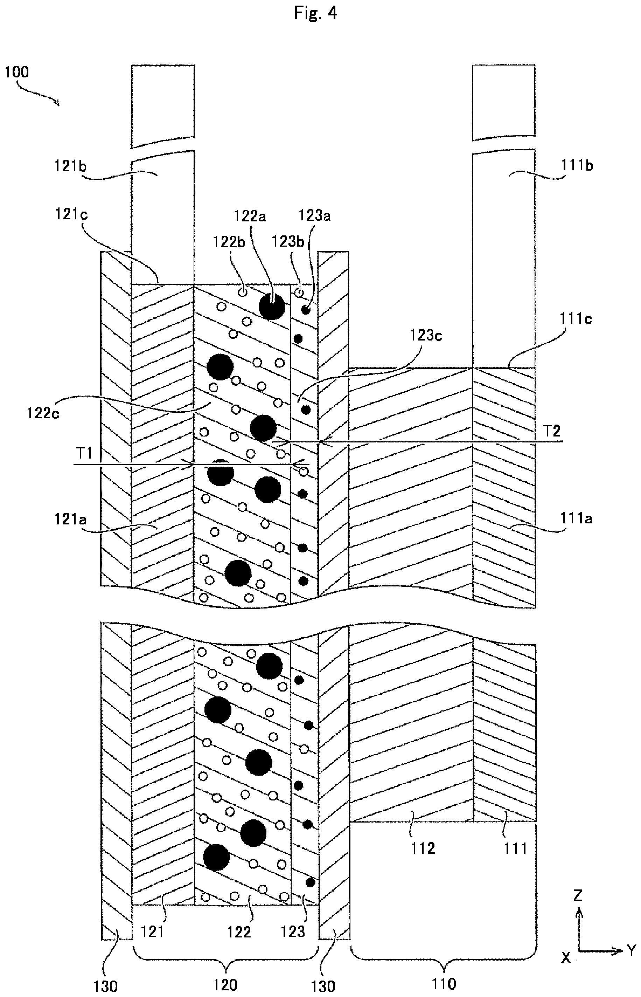

As illustrated in Figures 3 and 4, the positive electrode 110 includes a positive electrode current collector layer 111 and a positive electrode active material layer 112 bonded to the positive electrode current collector layer 111.

The positive electrode current collector layer 111 is formed in an elongated shape extending in the lateral width direction X. As illustrated in Figures 3 and 4, the positive electrode current collector 111 includes a current collector 111a and a positive electrode tab 111b. The current collector 111a is long in the lateral width direction X and is formed in a foil shape. As shown in Figure 4, the positive electrode active material layer 112 is bonded to the current collector 111a. The positive electrode active material layer 112 may be formed on both surfaces of the current collector 111a. For example, the positive electrode active material layer 112 faces all regions along a shorter direction (height direction Z) of the current collector 111a. As shown in Figures 3 and 4, the positive electrode tab 111b protrudes from a side edge 111c along a longer direction of the current collector 111a to the shorter direction (above the height direction Z) of the current collector 111a. The positive electrode tab 111b is formed integrally with the current collector 111a. For example, one positive electrode tab 111b is formed on the current collector 111a. The current collector 111a is formed of, for example, aluminum or an aluminum alloy, for example, an aluminum foil having a plate-like (sheet-like) shape.

The positive electrode active material layer 112 includes a positive electrode active material composed of a lithium-containing composite oxide, a binder, and a conductive auxiliary agent.

Examples of the lithium-containing composite oxide include metallic elements such as nickel (Nickel), cobalt (Cobalt), and manganese (Manganese), and lithium (Lithium).

Examples of the lithium-containing composite oxide may be a ternary lithium-containing composite oxide represented by the following formula:

Li_{1+X}M^{A}O₂ (1)

(wherein X satisfies -0.15 ≤ X ≤ 0.15, and M^{A} represents an element group containing at least one selected from the group consisting of Mn and Al, Ni, and Co.) The ternary lithium-containing composite oxide represented by the above general composition formula (1) has a high thermal stability and a stability in a high potential state, and the safety of the battery 1 and various battery characteristics can be enhanced by applying the oxide.

As the binder, for example, polyvinylidene fluoride (PVdF), polytetrafluoroethylene (PTFE), polyethylene, polystyrene, polybutadiene, polyacrylonitrile, polyvinyl fluoride, polypropylene fluoride, polychloroprene fluoride, butyl rubber, nitrile rubber, styrene butadiene rubber (SBR), polysulfide rubber, nitrocellulose, cyanoethyl cellulose, various latexes, acrylic resins, or mixtures thereof can be used.

As the conductive agent, a carbon-based material can be used. The carbon-based material may be crystalline carbon, amorphous carbon, or mixtures thereof. Examples of the crystalline carbon include artificial graphite, natural graphite (e.g., scaly graphite), or mixtures thereof. Examples of the amorphous carbon include carbon black (e.g., acetylene black, Ketjen black, channel black, furnace black, lamp black, thermal black, or mixtures thereof).

The positive electrode 110 can be formed, for example, as follows. The positive electrode active material and, optionally, the binder and the conductive agent are dispersed in a solvent (e.g., N-methyl-2-pyrrolidone (NMP), water) to prepare a paste-like or slurry-like positive electrode mixture composition. The positive electrode mixture composition is applied to the surface (one side or both sides) of the positive electrode current collector layer 111, dried, and subjected to calendering if necessary to form a positive electrode mixture layer. As a result, the positive electrode 110 is obtained. However, the positive electrode 110 is not limited to the one manufactured by the above-described manufacturing method, and may be manufactured by another method.

As shown in Figures 3 and 4, the negative electrode 120 includes a negative electrode current collector layer 121, a negative electrode first active material layer 122 (first active material layer) bonded to the negative electrode current collector layer 121, and a negative electrode second active material layer 123 (second active material layer) bonded to the negative electrode first active material layer 122. That is, the negative electrode 120 includes a plurality of active material layers.

The negative electrode current collector layer 121 is formed in an elongated shape extending in the lateral width direction X. As illustrated in Figures 3 and 4, the negative electrode current collector 121 includes a current collector 121a and a negative electrode tab 121b. The current collector 121a is long in the lateral width direction X and is formed in a foil shape. As shown in Figure 4, the current collector 121a has a longer width along the shorter direction (height direction Z) than the current collector 111a of the positive electrode 110. Both ends (from the upper end to the lower end in the height direction Z) of the negative electrode 120 along the shorter direction of the current collector 121a are positioned along the shorter direction of the current collector 111a of the positive electrode 110 via the separators 130. The negative electrode first active material layer 122 are bonded to the current collector 121a. The negative electrode first active material layer 122 may be formed on both surfaces of the current collector 121a. As shown in Figures 3 and 4, the negative electrode tab 121b protrudes from a side edge 121c along the longer direction of the current collector 121a to the shorter direction (above the height direction Z) of the current collector 121a. The negative electrode tab 121b protrudes in the same direction (upward in the height direction Z) as the positive electrode tab 111b of the positive electrode 110 while being laminated with the positive electrode 110 via the separators 130. The negative electrode tab 121b is spaced apart from the positive electrode tab 111b of the positive electrode 110 in the lateral width direction X while being laminated with the positive electrode 110 via the separators 130. The negative electrode tab 121b is formed integrally with the current collector 121a. For example, one negative electrode tab 121b is formed on the current collector 121a. The current collector 121a is formed of, for example, copper or a copper alloy. The tensile strength of the negative electrode current collector 121 is, for example, 30 kg/mm² or higher.

As shown in Figure 4, the negative electrode first active material layer 122 is bonded to the negative electrode current collector layer 121. The negative electrode first active material layer 122 corresponds to a high capacity layer in the negative electrode 120. The high capacity layer means a layer capable of storing relatively large amounts of lithium ions. That is, the negative electrode first active material layer 122 corresponds to a lithium ion receiving layer capable of storing more lithium ions in the negative electrode 120 than in the negative electrode current collector layer 121. The negative electrode first active material layer 122 includes a first graphite 122a and a first silicon simple substance or silicon compound 122b of 1 wt% or more and 90 wt% or less with respect to the total weight of the negative electrode first active material layer 122. Weight percent is wt%, that is, weight percent concentration.

The first graphite 122a is a negative electrode active material composed of a carbon-based material. The average particle diameter of the first graphite 122a is greater than the average particle diameter of the second graphite 123a. The average particle diameter of the first graphite 122a may be, for example, 10 µm or more and 35 µm or less in D50. In some embodiments, for example, the average particle diameter of the first graphite 122a may be 15 µm or more and 30 µm or less in D50. Here, D50 is a particle diameter when the integrated value is 50% in the particle size distribution measurement measured by a laser diffraction scattering type particle size distribution measurement method. In some embodiments, the content of the first graphite 122a may be, for example, 60 wt% or more and 98.5 wt% or less with respect to the total weight of the negative electrode first active material layer 122. In some embodiments, the content of the first graphite 122a may be, for example, 90 wt% or more and 98.5 wt% or less with respect to the total weight of the negative electrode first active material layer 122. In some embodiments, the content of the first graphite 122a may be, for example, 95 wt% or more and 98.5 wt% or less with respect to the total weight of the negative electrode first active material layer 122.

The first silicon simple substance or silicon compound 122b is a negative electrode active material. Examples of the silicon compound include a silicon oxide, for example, SiO. The content of the first silicon simple substance or silicon compound 122b is 1 wt% or more and 90 wt% or less with respect to the total weight of the negative electrode first active material layer 122. In an embodiment, the content of the first silicon simple substance or silicon compound 122b may be, for example, 1 wt% or more and 50 wt% or less with respect to the total weight of the negative electrode first active material layer 122. In an embodiment, the content of the first silicon simple substance or silicon compound 122b may be, for example, 1 wt% or more and 35 wt% or less with respect to the total weight of the negative electrode first active material layer 122.

The negative electrode first active material layer 122 further includes, for example, at least one first binder 122c (binder) selected from the group consisting of rubber-based, acrylic-based, polyamideimide, and polyimide. The content of the first binder 122c may be, for example, 0.5 wt% or more and 10 wt% or less with respect to the total weight of the negative electrode first active material layer 122. In some embodiments, the content of the first binder 122c may be, for example, 1 wt% or more and 5 wt% or less with respect to the total weight of the negative electrode first active material layer 122.

The negative electrode first active material layer 122 further includes, for example, a conductive auxiliary agent. Examples of the conductive auxiliary agent include carbon black such as acetylene black, Ketjen black, channel black, furnace black, lamp black, and thermal black. The amount of the conductive auxiliary agent or the like may be, for example, 0 wt% or more and 5 wt% or less with respect to the total weight of the negative electrode first active material layer 122. In an embodiment, the amount of the conductive auxiliary agent or the like may be, for example, 0 wt% or more and 3 wt% or less with respect to the total weight of the negative electrode first active material layer 122.

The thickness (first thickness T1) of one side of the negative electrode first active material layer 122 in the laminating direction (depth direction Y) may be, for example, 5 µm or more and 500 µm or less in an average thickness. In an embodiment, the thickness (first thickness T1) of one side of the negative electrode first active material layer 122 in the laminating direction (depth direction Y) may be, for example, 10 µm or more and 300 µm or less in terms of the average thickness. In an embodiment, the thickness of the negative electrode first active material layer 122 in the laminating direction may be the same as the thickness of the negative electrode second active material layer 123 in the average thickness.

As shown in Figure 4, the negative electrode second active material layer 123 is bonded to the negative electrode first active material layer 122. The negative electrode second active material layer 123 corresponds to a high input/output layer in the negative electrode 120. The high input/output layer means a layer capable of inputting and outputting lithium ions at a relatively high speed. That is, the negative electrode second active material layer 123 corresponds to a lithium ion receiving layer in which input and output of lithium ions are performed at a higher speed in the negative electrode 120 than in the negative electrode current collector layer 121. The negative electrode second active material layer 123 includes a second graphite 123a having an average particle diameter in D50 smaller than the first graphite 122a, and a second silicon simple substance or silicon compound 123b of 0 wt% or more and less than 1 wt% with respect to the total weight of the negative electrode second active material layer 123. In other words, in the embodiment, it is assumed that the negative electrode second active material layer 123 does not include a second silicon 123b, for example.

The second graphite 123a is a negative electrode active material composed of a carbon-based material. The second graphite 123a may be the same as the first graphite 122a except for the average particle diameter described below. The average particle diameter in D50 of the second graphite 123a is smaller than the average particle diameter of the first graphite 122a. In some embodiments, for example, the average particle diameter of the second graphite 123a may be 2 µm or more and 15 µm or less in D50. In some embodiments, for example, the average particle diameter of the second graphite 123a may be 5 µm or more and 12 µm or less in D50.

The second silicon simple substance or silicon compound 123b is a negative electrode active material. Examples of the silicon compound include a silicon oxide, for example, SiO. The second silicon simple substance or silicon compound 123b may be the same material as the first silicon simple substance or silicon compound 122b. The content of the second silicon simple substance or silicon compound 123b may be, for example, 0 wt% or more and 1 wt% or less with respect to the total weight of the negative electrode second active material layer 123. In an embodiment, the content of the second silicon simple substance or silicon compound 123b may be, for example, 0 wt% or more and 0.5 wt% or less with respect to the total weight of the negative electrode second active material layer 123. In some embodiments, the negative electrode second active material layer 123 may not include the second silicon simple substance or silicon compound 123b.

The negative electrode second active material layer 123 further includes, for example, at least one second binder 123c (binder) selected from the group consisting of rubber-based, acrylic-based, polyamideimide, and polyimide. The second binder 123c may be the same as the first binder 122c. The content of the second binder 123c may be, for example, 0.2 wt% or more and 5 wt% or less with respect to the total weight of the negative electrode second active material layer 123. In some embodiments, the content of the second binder 123c may be, for example, 0.5 wt% or more and 2 wt% or less with respect to the total weight of the negative electrode second active material layer 123.

The negative electrode second active material layer 123 further includes, for example, at least one additional carbon selected from the group consisting of an easily graphitizable carbon, a hardly graphitizable carbon, an amorphous carbon, and a low crystalline carbon. The easily graphitizable carbon corresponds to soft carbon. The non-graphitic carbon corresponds to a hard carbon. The amorphous carbon corresponds to amorphous carbon. The amorphous carbon is, for example, carbon black such as acetylene black, Ketjen black, channel black, furnace black, lamp black, and thermal black. The amount of the additional carbon may be, for example, 0 wt% or more and 50 wt% or less with respect to the total weight of the negative electrode second active material layer 123. In some embodiments, the amount of additional carbon may be 5 wt% or more and 50 wt% or less with respect to the total weight of the negative electrode second active material layer 123, for example. In some embodiments, the amount of additional carbon may be 10 wt% or more and 40 wt% or less with respect to the total weight of the negative electrode second active material layer 123, for example.

The additional carbon serves as, for example, a conductive auxiliary agent or the like. The amount of the conductive auxiliary agent or the like may be, for example, 0 wt% or more and 5 wt% or less with respect to the total weight of the negative electrode second active material layer 123. In an embodiment, the amount of the conductive auxiliary agent or the like may be, for example, 0 wt% or more and 3 wt% or less with respect to the total weight of the negative electrode second active material layer 123.

The thickness (second thickness T2) of one side of the negative electrode second active material layer 123 in the laminating direction (depth direction Y) may be, for example, 5 µm or more and 500 µm or less in terms of the average thickness. In an embodiment, the thickness (second thickness T2) of one side of the negative electrode second active material layer 123 in the laminating direction (depth direction Y) may be, for example, 10 µm or more and 300 µm or less in terms of the average thickness. In an embodiment, the thickness of the negative electrode second active material layer 123 in the laminating direction may be the same as the thickness of the negative electrode first active material layer 122 in the average thickness.

As shown in Figures 3 and 4, the separator 130 has an insulating function of insulating between the positive electrode 110 and the negative electrode 120 and preventing a short circuit between the positive electrode 110 and the negative electrode 120, and a function of holding a nonaqueous electrolyte. The separator 130 allows lithium ions to pass through the electrolyte. The separator 130 is formed in an elongated shape. As shown in Figure 4, the separators 130 are longer in width along the shorter direction (height direction Z) than the current collector 111a of the positive electrode 110 and the current collector 121a of the negative electrode 120. Both ends (from upper end to lower end in the height direction Z) of the positive electrode 110 along the shorter direction of the current collector 111a are located within a range (from upper end to lower end in the height direction Z) along the shorter direction of the separators 130, and both ends (from upper end to lower end in the height direction Z) along the shorter direction of the current collector 121a of the negative electrode 120 are located. The separator 130 is made of a porous material. As the separator 130, a porous sheet made of a resin such as polyethylene (PE: PolyEthylene), polypropylene (PP: PolyPropylene), polyester, cellulose, or polyamide, or a laminated sheet thereof (for example, a sheet having a three-layer structure of PP/PE/PP) is used.

One or both surfaces of the separator 130 may be provided with a layer including an inorganic material (e.g., alumina particles etc.) and a binder. Thus, even when the battery 1 is used in an abnormal state (for example, when the temperature of the lithium ion secondary battery rises to 160 °C or higher due to overcharge, crushing, etc.), the separator 130 is prevented from melting and the insulating function can be maintained. Therefore, the safety of the battery 1 is improved.

The electrolyte corresponds to a so-called electrolyte. The electrolyte is impregnated into the separator 130 and is in contact with the positive electrode 110 and the negative electrode 120. The electrolyte includes an organic solvent, a support salt, and an additive. As the organic solvent, for example, a carbonate ester or the like is used. As the support salt, for example, a lithium salt is used. As the additive, for example, vinylene carbonate or fluoroethylene carbonate is used.

As shown in Figure 1, the container 200 contains a charge/discharge body 100. The container 200 includes a case 201 and a lid 202. The lid 202 is joined to the opening of the case 201, and seals the charge/discharge body 100 together with the case 201. The charge/discharge body 100 sealed by the case 201 and the lid 202 is filled with an electrolyte.

As illustrated in Figure 1, the external terminal 300 includes a positive electrode terminal 301 and a negative electrode terminal 302. The positive electrode terminal 301 and the negative electrode terminal 302 relay input and output of electric power between the charge/discharge body 100 and an external device. In addition, in a case where a battery pack is configured by using a plurality of batteries 1, the other negative electrode terminal 302 adjacent to one of the adjacent positive electrode terminals 301 is joined via a bus bar. The positive electrode terminal 301 is indirectly or directly bonded to the positive electrode tab 111b via a positive electrode current collector plate. The negative electrode terminal 302 is indirectly or directly bonded to the negative electrode tab 121b via a negative electrode current collector plate. The positive electrode terminal 301 and the negative electrode terminal 302 are attached to the lid 202.

### (Manufacturing Method of Battery 1 Including Negative Electrode 120 and Negative Electrode 120 of Embodiment)

The battery 1 including the negative electrode 120 and the negative electrode 120 can be manufactured by using a known technique in this technical field, except for manufacturing the negative electrode 120 by coating a negative electrode mixture composition of the negative electrode first active material layer 122 described above (that is, the composition containing a material contained in the negative electrode first active material layer 122 and a solvent such as N-methyl-2-pyrrolidone (NMP) and/or water) on the negative electrode current collector layer 121 by a known technique, and by coating a negative electrode mixture composition of the negative electrode second active material layer 123 described above (that is, the composition containing a material contained in the negative electrode second active material layer 123 and a solvent such as N-methyl-2-pyrrolidone (NMP) and/or water) on the negative electrode first active material layer 122 by a known technique.

For example, the negative electrode 120 can be formed as follows. First, materials included in the negative electrode first active material layer 122 are prepared. The materials may be particulate. The materials are dispersed in a solvent (e.g., N-methyl-2-pyrrolidone (NMP) and/or water) to prepare a negative electrode mixture composition for the negative electrode first active material layer 122 in a pasty or slurry form. The prepared negative electrode mixture composition is applied to a surface (one side or both sides) of the negative electrode current collector layer 121, dried, and subjected to calendering if necessary to form the negative electrode first active material layer 122. Further, materials included in the negative electrode second active material layer 123 are prepared. The materials may be particulate. The materials are dispersed in a solvent (e.g., N-methyl-2-pyrrolidone (NMP) and/or water) to prepare a negative electrode mixture composition for the negative electrode second active material layer 123 in a pasty or slurry form. The prepared negative electrode mixture composition is applied to the surface (one side or both sides) of the negative electrode first active material layer 122, dried, and subjected to calendering if necessary to form the negative electrode second active material layer 123. As a result, the negative electrode 120 is obtained. However, the negative electrode 120 is not limited to the one manufactured by the above-described manufacturing method, and may be manufactured by another method.

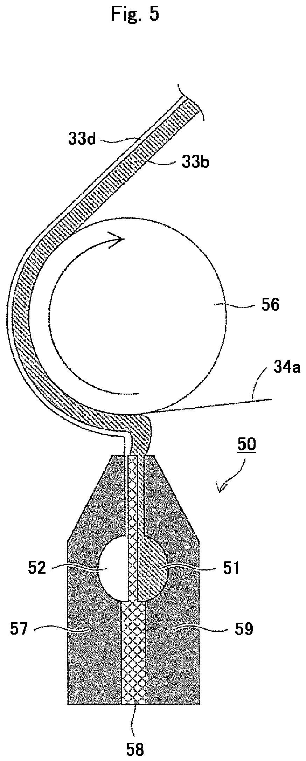

Further, as the method for manufacturing the negative electrode 120 according to the embodiment, a manufacturing method in which the negative electrode first active material layer and the negative electrode second active material layer of the negative electrode active material layer are simultaneously coated may be used. Hereinafter, this manufacturing method will be described with reference to Figure 5.

In this manufacturing method, materials (for example, a negative electrode active material, a conductive auxiliary agent, a binder, or the like) included in the negative electrode first active material layer are prepared. These materials are mixed and the resulting mixture is dispersed in a solvent (e.g., N-methyl-2-pyrrolidone (NMP) and/or water) to obtain a negative electrode first slurry. Further, materials (for example, a negative electrode active material, a conductive auxiliary agent, a binder, or the like) included in the negative electrode second active material layer are prepared. These materials are mixed and the resulting mixture is dispersed in a solvent (e.g., N-methyl-2-pyrrolidone (NMP) and/or water) to obtain a negative electrode second slurry.

Next, for example, the negative electrode first slurry and the negative electrode second slurry are simultaneously applied onto the negative electrode current collector 34a using the die head 50 as shown in Figure 5. The die head 50 has an outlet block 57, a three-dimensional shim 58, and an inlet block 59. Inside the die head 50, a negative electrode second slurry manifold 52 and a negative electrode first slurry manifold 51 are provided. The negative electrode second slurry and the negative electrode first slurry are simultaneously discharged from the manifolds 52 and 51 toward the negative electrode current collector 34a conveyed along the back roller 56. Thereby, the negative electrode second slurry layer 33d and the negative electrode first slurry layer 33b are formed. Next, the negative electrode first slurry layer 33b and the negative electrode second slurry layer 33d are dried by volatilizing the solvents contained in the negative electrode first slurry layer 33b and the negative electrode second slurry layer 33d in a drying oven etc. Thereby, a negative electrode first active material layer (not shown) and a negative electrode second active material layer (not shown) are formed on one surface of the negative electrode current collector 34a. Next, the negative electrode current collector 34a, the negative electrode first active material layer, and the negative electrode second active material layer are pressed. Specifically, the laminate including the negative electrode current collector 34a, the negative electrode first active material layer, and the negative electrode second active material layer is sandwiched between rollers heated to 60 to 120 °C and is pressed. Thereafter, the laminate is slit to a predetermined width. Thereby, a negative electrode is obtained.

In the battery including the negative electrode manufactured by the manufacturing process to which the simultaneous coating of the two or more layers is applied, since the interface between the negative electrode first slurry layer 33b and the negative electrode second slurry layer 33d has the uneven shape, the adhesion of the negative electrode first slurry layer 33b and the negative electrode second slurry layer 33d is improved, and the reliability of the battery can be improved without the two layers being peeled off even if the volume change due to charge and discharge occurs.

### (Effect of Battery 1 Including Negative Electrode 120 of Embodiment)

The effect of the battery 1 including the negative electrode 120 of the embodiment will be described with reference to Figure 4.

The first active material layer (negative electrode first active material layer 122) of the negative electrode 120 includes a first graphite 122a and a first silicon simple substance or silicon compound 122b of 1 wt% or more and 90 wt% or less with respect to the total weight of the negative electrode first active material layer 122. The second active material layer (negative electrode second active material layer 123) of the negative electrode 120 includes a second graphite 123a having an average particle diameter smaller than that of the first graphite, and a second silicon simple substance or silicon compound 123b of 0 wt% or more and less than 1 wt% with respect to the total weight of the negative electrode second active material layer 123. The battery 1 includes the negative electrode 120, a positive electrode 110, and an electrolyte.

According to such a configuration, the durability of the battery 1 is improved. Therefore, by improving the durability of the battery 1, deterioration of the negative electrode 120 due to repeated charging and discharging of the battery 1 can be suppressed, and thereby deterioration of the charging and discharging cycle characteristics of the battery 1 can be suppressed. Therefore, the battery 1 can be rapidly charged while suppressing a decrease in life.

Specifically, in the negative electrode 120, the negative electrode first active material layer 122 includes a first graphite 122a having a relatively large average particle diameter (i.e., a small specific surface area) as compared with the average particle diameter of the second graphite 123a included in the negative electrode second active material layer 123. The first graphite 122a and the second graphite 123a in the negative electrode 120 may react with the electrolyte and form a film on the graphite surfaces as the batteries 1 are charged and discharged. The film traps lithium ions and reduces the lithium ion storability of the graphite. Therefore, in order to improve the lithium ion storability of the negative electrode first active material layer 122, it is sufficient to prevent the film from being formed, and in order to prevent the film from being formed, it is sufficient to reduce the surface area of the graphite which reacts with the electrolyte, that is, to reduce the specific surface area of the graphite (that is, increase the average particle diameter). Therefore, in the negative electrode 120, by making the average particle diameter of the first graphite 122a contained in the negative electrode first active material layer 122 larger than the average particle diameter of the second graphite 123a contained in the negative electrode second active material layer 123, the amount of film that can be formed by reacting the graphite with the electrolyte is reduced, and good storage properties of lithium ions are ensured, and consequently, the negative electrode first active material layer 122 can function as a high capacity layer of the negative electrode 120.

Further, the negative electrode first active material layer 122 contains the first silicon simple substance or silicon compound 122b in an amount of 1 wt% or more and 90 wt% or less with respect to the total weight of the negative electrode first active material layer 122. When the negative electrode first active material layer 122 contains the first silicon simple substance or silicon compound 122b having excellent lithium ion storability, the capacity of the battery 1 can be increased.

The negative electrode first active material layer 122 may include, for example, at least one first binder 122c selected from the group consisting of rubber-based, acrylic-based, polyamideimide, and polyimide.

According to such a configuration, even if the first silicon simple substance or silicon compound 122b contained in the negative electrode first active material layer 122 expands or contracts relatively significantly during the charging and discharging of the battery 1, the decrease in the tensile strength of the negative electrode current collector layer 121 and/or the negative electrode first active material layer 122 and/or the negative electrode second active material layer 123 due to the repeated input of stresses of the first binder 122c can be made relatively small. That is, the decrease over time in the tensile strength of the negative electrode current collector layer 121 and/or the negative electrode first active material layer 122 and/or the negative electrode second active material layer 123 due to the expansion or contraction of the first silicon simple substance or silicon compound 122b caused by the repetition of the charging and discharging of the battery 1 is relatively small as compared with the case where the binder is not included due to the first binder 122c. More specifically, even if the first silicon simple substance or silicon compound 122b contained in the negative electrode first active material layer 122 expands relatively significantly when the battery 1 is charged, the first binder 122c can sufficiently retain the first silicon simple substance or silicon compound 122b. The fact that the first binder 122c can sufficiently retain the first silicon simple substance or silicon compound 122b means that the first silicon simple substance or silicon compound 122b can be sufficiently maintained to be fixed to the negative electrode current collector layer 121 and/or the negative electrode second active material layer 123 by the first binder 122c, for example. On the other hand, even if the first silicon simple substance or silicon compound 122b contained in the negative electrode first active material layer 122 shrinks relatively large during discharging of the battery 1, the first silicon simple substance or silicon compound 122b can be sufficiently maintained by the first binder 122c. That is, even if the first silicon simple substance or silicon compound 122b contained in the negative electrode first active material layer 122 relatively significantly expands or contracts with the charging and discharging of the battery 1, the separation between the negative electrode first active material layer 122 and the negative electrode current collector layer 121 and/or the negative electrode second active material layer 123 can be suppressed. That is, deterioration of the battery characteristics of the charge/discharge body 100 can be suppressed. As a result, deterioration in the quality of the negative electrode 120 due to repeated charging and discharging of the battery 1 can be suppressed, deterioration in a charge-discharge cycle characteristics of the battery 1 can be suppressed, and the life of the battery 1 can be extended.

For example, the negative electrode current collector 121 may have a tensile strength of 30 kg/mm² or higher.

According to such a configuration, even if the first silicon simple substance or silicon compound 122b contained in the negative electrode first active material layer 122 relatively significantly expands or contracts with the charging and discharging of the battery 1, the expansion or contraction can be suppressed by the negative electrode current collector layer 121 bonded to the negative electrode first active material layer 122. Therefore, separation between the negative electrode current collector layer 121 and the negative electrode first active material layer 122 can be suppressed. In addition, since the first silicon simple substance or silicon compound 122b contained in the negative electrode first active material layer 122 is suppressed from being relatively greatly expanded or contracted, separation of the negative electrode second active material layer 123 bonded to the negative electrode first active material layer 122 and the negative electrode first active material layer 122 can be suppressed. That is, deterioration of the battery characteristics of the charge/discharge body 100 can be suppressed. As a result, deterioration in the quality of the negative electrode 120 due to the repeated charging and discharging of the battery 1 can be suppressed, deterioration in the charge-discharge cycle characteristics of the battery 1 can be suppressed, and the life of the battery 1 can be extended.

In the negative electrode 120, the negative electrode second active material layer 123 includes a second graphite 123a having an average particle diameter (that is, a smaller volume) that is relatively smaller than the average particle diameter of the first graphite 122a included in the negative electrode first active material layer 122. The smaller the volume of the graphite, the shorter the migration distance of the lithium ions therein, so that the lithium ions can be input and output at high speed. Therefore, in the negative electrode 120, by making the average particle diameter of the second graphite 123a contained in the negative electrode second active material layer 123 smaller than the average particle diameter of the first graphite 122a contained in the negative electrode first active material layer 122, lithium ions can be input and output at high speed, and consequently, the negative electrode second active material layer 123 can function as the high input and output layer of the negative electrode 120.

Further, the negative electrode second active material layer 123 contains the second silicon simple substance or silicon compound 123b in an amount of 0 wt% or more and less than 1 wt% with respect to the total weight of the negative electrode second active material layer 123. In other words, the ratio of the second silicon simple substance or silicon compound 123b in the negative electrode second active material layer 123 is smaller than the ratio of the first silicon simple substance or silicon compound 122b in the negative electrode first active material layer 122. The first silicon simple substance or silicon compound 122b and the second silicon simple substance or silicon compound 123b in the negative electrode 120 expand as the battery 1 is charged, and contract as the battery 1 is discharged. Accordingly, since the negative electrode second active material layer 123 includes a second silicon simple substance or silicon compound 123b less than the first silicon simple substance or silicon compound 122b contained in the negative electrode first active material layer 122, expansion or contraction of the second silicon simple substance or silicon compound 123b in the negative electrode second active material layer 123 that may occur with the charging and discharging of the battery 1 is suppressed, and separation of the negative electrode second active material layer 123 from the negative electrode first active material layer 122 is suppressed, and consequently, durability of the battery 1 and rapid charge characteristics of the battery 1 contradictory to the high energy density of the battery 1 can be improved.

The negative electrode second active material layer 123 may include, for example, at least one selected from the group consisting of an easily graphitizable carbon, a hardly graphitizable carbon, an amorphous carbon, and a low crystalline carbon.

According to such a configuration, lithium ions can be input and output at a relatively high speed depending on at least one selected from the group consisting of the easily graphitizable carbon, the hardly graphitizable carbon, the amorphous carbon, and the low crystalline carbon. That is, the negative electrode second active material layer 123 can function as a high input/output layer of the negative electrode 120. As a result, it is possible to quickly charge the battery 1 while suppressing a decrease in the life of the battery 1.

### [Examples]

### (Experimental Results of Battery 1 Including Negative Electrode 120 of Embodiment)

Experimental results of the battery 1 including the negative electrode 120 of the embodiment will be described with reference to Tables 1 to 3. Tables 1 and 2 show the configurations of the batteries of Examples 1 to 13 and Comparative Examples 1 to 5, and Table 3 shows the test results (the capacity after one cycle and 100 cycles, and a direct current resistance (DCR) after one cycle) of the batteries. The battery capacity, charge/discharge cycle, and the DCR are measured as follows.

### <Battery Capacity>

Regarding the battery capacity, constant voltage-constant current charging (CC-CV charging) until the battery voltage becomes 4.2 V was performed at the charging current 1C for a total of 2.5 hours. After 30 minutes of pause, constant current discharge (CC discharge) was performed at a discharge current 0.2C up to the battery voltage 2.9 V to obtain an initial capacity.

### <Charge/Discharge Cycle>

In the charge/discharge cycle test, 99 times of charge/discharge were repeated after the battery capacity was measured. Constant voltage-constant current charging (CC-CV charging) was performed at a charging current 1C for a total of 2.5 hours until the battery voltage became 4.2 V. After 30 minutes of pause, the constant current discharge (CC discharge) was performed at a discharge current 1C up to the battery voltage 2.9 V. It was then paused for 30 minutes. The battery capacity was measured again after the charge-discharge cycle, and compared with the initial battery capacity.

### <DCR>

The relationship between SOC and open circuit voltage (OCV) was obtained by using the voltage after discharging the battery capacity from 4.2 V in increments of 5 % of the battery capacity and pausing for 2 hours as an OCV, and the relationship with the SOC was obtained.

Regarding a DCR of SOC 25 % that is a low SOC range, a CC-CV charging was carried out from SOC 0 % to SOC 25 % at charge current of 1C using the relationship of SOC-OCV. Next, the lithium ion secondary battery was held in a thermostatic bath at -10 °C for 5 hours. After that, the lithium ion secondary battery was discharged at a constant current of 0.5C for 10 seconds, and a voltage drop value caused by the discharge was measured. Further, similar constant current discharges were performed with discharge currents 1C, 1.5C and 2C. The discharge current is plotted on the horizontal axis and the voltage drop value is plotted on the vertical axis, and a slope of the graph is determined as a DCR. The DCR (relative value) of the lithium ion secondary batteries of Examples and Comparative Examples were calculated, the DCR of the lithium ion secondary battery of Example 1 being normalized to 100. The lower the DCR in SOC 25 %, the lower an internal resistance of the lithium ion secondary battery in the low SOC range.

### [Table 1]

**Table 1**

| | First Active Material Layer | | | Second Active Material Layer | | |
|---|---|---|---|---|---|---|
| | Concentration of SiO (wt%) | Average Particle Diameter of Graphite D50 (µm) | Binder | Concentration of SiO (wt%) | Average Particle Diameter of Graphite D50 (µm) | Amorphous Carbon |
| Example 1 | 10 | 20 | SBR | 0 | 8 | Added |
| Example 2 | 30 | 20 | SBR | 0 | 8 | Added |
| Example 3 | 10 | 12 | SBR | 0 | 8 | Added |
| Example 4 | 10 | 30 | SBR | 0 | 8 | Added |
| Example 5 | 10 | 20 | SBR | 0.5 | 8 | Added |
| Example 6 | 10 | 20 | SBR | 0 | 3 | Added |
| Example 7 | 10 | 20 | SBR | 0 | 12 | Added |
| Example 8 | 10 | 20 | SBR | 0 | 8 | Not Added |
| Example 9 | 10 | 20 | AR | 0 | 8 | Added |
| Example 10 | 10 | 20 | PI | 0 | 8 | Added |
| Example 11 | 10 | 20 | SBR | 0 | 8 | Added |
| Example 12 | 10 | 20 | SBR | 0 | 8 | Added |
| Example 13 | 10 | 20 | SBR | 0 | 8 | Added |
| Comparative Example 1 | - | - | - | 0 | 8 | Added |
| Comparative Example 2 | 10 | 20 | SBR | - | - | - |
| Comparative Example 3 | 0 | 20 | SBR | 0 | 8 | Added |
| Comparative Example 4 | 95 | 20 | SBR | 0 | 8 | Added |
| Comparative Example 5 | 10 | 20 | SBR | 10 | 8 | Added |

| | | | | | | |
|---|---|---|---|---|---|---|
| SBR: Styrene Butadiene Rubber AR: Acrylic Resin PI: Polyimide wt%: Concentration Relative to The Total Weight of Each Active Material Layer D50: | | | | | | |

### [Table 2]

**Table 2**

| | Current Collector Layer | Active Material Layer |
|---|---|---|
| | Tensile Strength (kg/mm²) | Thickness of First Active Material Layer/ Thickness of Second Active Material Layer |
| Example 1 | 50 | 1/1 |
| Example 2 | 50 | 1/1 |
| Example 3 | 50 | 1/1 |
| Example 4 | 50 | 1/1 |
| Example 5 | 50 | 1/1 |
| Example 6 | 50 | 1/1 |
| Example 7 | 50 | 1/1 |
| Example 8 | 50 | 1/1 |
| Example 9 | 50 | 1/1 |
| Example 10 | 50 | 1/1 |
| Example 11 | 30 | 1/1 |
| Example 12 | 50 | 1/2 |
| Example 13 | 50 | 2/1 |
| Comparative Example 1 | 50 | 0/1 |
| Comparative Example 2 | 50 | 1/0 |
| Comparative Example 3 | 50 | 1/1 |
| Comparative Example 4 | 50 | 1/1 |
| Comparative Example 5 | 50 | 1/1 |

| | | |
|---|---|---|
| Thickness Ratio: Thickness of First Active Material Layer (First Thickness T1)/ Thickness of Second Active Material Layer (Second Thickness T2) | | |

### [Table 3]

**Table 3**

| | Capacity (%) | | DCR (%) |
|---|---|---|---|
| | After One Cycle * After Initial Charge | After 100 cycles | |
| Example 1 | 100 * Standard Value | 85 | 100 * Standard Value |
| Example 2 | 153 | 80 | 100 |
| Example 3 | 100 | 84 | 98 |
| Example 4 | 100 | 86 | 102 |
| Example 5 | 101 | 83 | 100 |
| Example 6 | 100 | 84 | 95 |
| Example 7 | 100 | 86 | 105 |
| Example 8 | 100 | 86 | 120 |
| Example 9 | 100 | 86 | 98 |
| Example 10 | 99 | 89 | 102 |
| Example 11 | 100 | 83 | 100 |
| Example 12 | 98 | 87 | 95 |
| Example 13 | 102 | 83 | 105 |
| Comparative Example 1 | 93 | 95 | 90 |
| Comparative Example 2 | 107 | 74 | 130 |
| Comparative Example 3 | 93 | 95 | 100 |
| Comparative Example 4 | 253 | 60 | 95 |
| Comparative Example 5 | 107 | 73 | 100 |

| | | | |
|---|---|---|---|
| Capacity [Ah]: Relative Value When Value After One Cycle of Example 1 Is Defined as 100 % (* Standard Value) DCR [Ω]: Relative Value When DCR of Example 1 Is Defined as 100% (* Standard Value) Test Temperature = -10 °C, Discharge Time = 10 s, SOC = 25 % | | | |

Tables 1 to 3 showed the following: Here, Example 1 and Examples 2 to 13 or Comparative Examples 1 to 5 are compared with respect to Example 1. In addition, the capacity is preferably larger, the DCR is a property related to rapid charge and is preferably smaller.

Examples 1 and 2 to 13 are compared. In Example 2, it was found that when the first silicon simple substance or silicon compound 122b in the negative electrode first active material layer 122 was increased to 30 wt% with respect to the total weight of the negative electrode first active material layer 122, the capacity after 100 cycles was slightly decreased, but the capacity after one cycle was increased to about 1.5 times. In Example 3, it was found that when the average particle diameter D50 of the first graphite 122a in the negative electrode first active material layer 122 was larger than 8 µm, which is the average particle diameter D50 of the second graphite 123a in the negative electrode second active material layer 123, but the average particle diameter was decreased to 12 µm, the capacity after 100 cycles was slightly decreased, but the direct current resistance (DCR) was decreased. In Example 4, it was found that when the average particle diameter D50 of the first graphite 122a in the negative electrode first active material layer 122 was increased to 30 µm, the capacity after 100 cycles increased although the DCR was slightly increased. In Example 5, it was found that when 0.5 wt% of the second silicon simple substance or silicon compound 123b was added to the negative electrode second active material layer 123 with respect to the total weight of the negative electrode second active material layer 123, the capacity after 100 cycles was slightly decreased, but the capacity after one cycle was increased. In Example 6, it was found that when the average particle diameter D50 of the second graphite 123a in the negative electrode second active material layer 123 was reduced to 3 µm, the capacity after 100 cycles was slightly reduced, but the DCR was reduced. In Example 7, it was found that when the average particle diameter D50 of the second graphite 123a in the negative electrode second active material layer 123 was smaller than 20 µm, which is the average particle diameter D50 of the first graphite 122a in the negative electrode first active material layer 122, but increased to 12 µm, the DCR became slightly larger, but the capacity after 100 cycles increased. In Example 8, it was found that when amorphous carbon was not added to the negative electrode second active material layer 123, the DCR increased, but the capacity after 100 cycles increased. In Example 9, it was found that when the first binder 122c in the negative electrode first active material layer 122 was changed to an acrylic resin (AR), the capacity after 100 cycles increased and the DCR decreased. In Example 10, it was found that when the first binder 122c in the negative electrode first active material layer 122 was changed to polyimide (PI), the capacity after one cycle decreased and the DCR increased, but the capacity after 100 cycles increased. In Example 11, it was found that when the tensile strength of the negative electrode current collector layer 121 was reduced to 30 kg/mm², the capacity after 100 cycles was slightly reduced, but the performance almost equivalent to that of Example 1 could be maintained. In Example 12, it was found that when the thickness of the negative electrode first active material layer 122 in the laminating direction was reduced to 1/2 of the thickness of the negative electrode second active material layer 123 in the laminating direction, the capacity after one cycle slightly decreased, but the capacity after 100 cycles increased and the DCR decreased. In Example 13, it was found that when the thickness of the negative electrode first active material layer 122 in the laminating direction was increased up to twice the thickness of the negative electrode second active material layer 123 in the laminating direction, the capacity after 100 cycles slightly decreased and the DCR slightly increased, but the capacity after one cycle increased.

Next, Example 1 and Comparative Examples 1 to 5 are compared. In Comparative Example 1, it was found that when the negative electrode first active material layer 122 was not present, the capacity after 100 cycles was increased and the DCR was decreased, but the capacity after one cycle was greatly decreased. In Comparative Example 2, it was found that when the negative electrode second active material layer 123 was not present, the capacity after one cycle was slightly increased, but the capacity after 100 cycles was significantly decreased and the DCR was also significantly increased. In Comparative Example 3, it was found that when the first silicon simple substance or silicon compound 122b was not added to the negative electrode first active material layer 122, the capacity after 100 cycles was increased, but the capacity after one cycle was greatly decreased. In Comparative Example 4, it was found that when the first silicon simple substance or silicon compound 122b was added to the negative electrode first active material layer 122 in the amount of 95 wt% with respect to the total weight of the negative electrode first active material layer 122, the capacity after one cycle was increased by about 2.5 times, and although the DCR was slightly reduced, the capacity after 100 cycles was greatly reduced. In Comparative Example 5, it was found that when the second silicon simple substance or silicon compound 123b was added to the negative electrode second active material layer 123 in an amount of up to 10 wt% with respect to the total weight of the negative electrode second active material layer 123, the capacity after one cycle was slightly increased, but the capacity after 100 cycles was significantly decreased.

Therefore, by comparison between Example 1 and one or more of Examples 2 to 13 and Comparative Examples 1 to 5, the negative electrode and the battery of the above-described embodiment have the following configuration, or preferably have the following configuration.

Comparing Example 1 with Comparative Examples 1 and 2, the negative electrode 120 includes a negative electrode first active material layer 122 and a negative electrode second active material layer 123. Comparing Example 1 with Example 2 and Comparative Examples 3 and 4, the negative electrode first active material layer 122 includes a first silicon simple substance or silicon compound 122b of 1 wt% or more and 90 wt% or less with respect to the total weight of the negative electrode first active material layer 122. Comparing Example 1 with Examples 3, 4, 6 and 7, it is preferable that the negative electrode first active material layer 122 contains a first graphite 122a having an average particle diameter larger than that of the negative electrode second active material layer 123, specifically, the negative electrode first active material layer 122 contains a first graphite 122a having an average particle diameter larger than that of the second graphite 123a contained in the negative electrode second active material layer 123 and in D50 of 10 µm or more and 35 µm or less, and the negative electrode second active material layer 123 contains a second graphite 123a having an average particle diameter smaller than that of the first graphite 122a contained in the negative electrode first active material layer 122 and in D50 of 2 µm or more and 15 µm or less. Comparing Example 1 with Example 5 and Comparative Example 5, the negative electrode second active material layer 123 contains 0 wt% or more and less than 1 wt% of the second silicon simple substance or silicon compound 123b with respect to the total weight of the negative electrode second active material layer 123. Comparing Example 1 with Example 8, it is preferable that the negative electrode second active material layer 123 further contains at least one additional carbon selected from the group consisting of an easily graphitizable carbon, a hardly graphitizable carbon, an amorphous carbon, and a low crystalline carbon, particularly the amorphous carbon. Comparing Example 1 with Examples 9 and 10, it is preferable that the negative electrode first active material layer 122 further includes a first binder 122c, and specifically, the negative electrode first active material layer 122 further includes at least one first binder 122c selected from the group consisting of rubber-based, acrylic-based, polyamideimide, and polyimide. Comparing Example 1 with Example 11, the tensile strength of the negative electrode current collector 121 is preferably 30 kg/mm² or higher, particularly 40 kg/mm² or higher. Comparing Example 1 with Examples 12 and 13, the thickness of the negative electrode first active material layer 122 in the laminating direction can be changed depending on the characteristics of the battery to be obtained.

### (Other Embodiments)

The negative electrode and the lithium ion secondary battery of the present disclosure are not limited to the configuration of the lithium ion secondary battery 1 described in the embodiment, and can be appropriately configured based on the contents described in the claims.

The embodiments have been described in detail or simply in order to clearly explain the present disclosure, and it is not necessary for the embodiments to include all of the configurations described, or the embodiments may include configurations that are not illustrated. In addition, a part of the configuration of the embodiment may be deleted, replaced with the configuration of the other embodiments, or a combination of the configurations of the other embodiments.

The lithium ion secondary battery 1 is not limited to a battery that is mounted on an electric vehicle and supplies electric power to a driving motor of the electric vehicle. For example, the lithium ion secondary battery 1 can be applied to a battery mounted on a portable electronic device such as a smartphone (registered trademark) or a battery mounted on a stationary power generation device.

The negative electrode 120 is not limited to a configuration in which two or more types of active material layers are provided in the negative electrode current collector layer 121. For example, the negative electrode 120 may be configured such that three or more types of active material layers are provided in the negative electrode current collector layer 121.

The negative electrode 120 is not limited to a configuration in which two types of active material layers are provided only on one side of the negative electrode current collector layer 121. For example, the negative electrode 120 may be configured such that two types of active material layers are provided on both sides of the negative electrode current collector layer 121. In the negative electrode 120, two types of active material layers may be provided on one side of the negative electrode current collector layer 121, and one type of active material layer may be provided on the other side of the negative electrode current collector layer 121.

The negative electrode 120 is not limited to a configuration in which a negative electrode tab 121b protruding from the negative electrode current collector 121a is provided. For example, the negative electrode 120 may be configured such that an end portion of the wound negative electrode current collector 121a is electrically connected to the negative electrode terminal 302 via the negative electrode current collector plate. In addition, the negative electrode 120 may be configured such that an end portion of the wound negative electrode current collector 121a is electrically connected to the negative electrode terminal 302.

The charge/discharge body 100 is not limited to a wound type in which an elongated positive electrode 110 and an elongated negative electrode 120 are wound through an elongated separator 130. For example, the charge/discharge body 100 may be configured by a laminated type in which a plurality of positive electrodes, a plurality of separators, and a plurality of negative electrodes each having a rectangular shape are laminated. Further, the charge/discharge body 100 may be configured as a laminated type in which a plurality of positive electrodes and a plurality of negative electrodes formed in a relatively short shape are alternately provided with respect to one separator formed in a long shape while being opposed to each other via a separator. In the charge/discharge body 100 having such a configuration, the positive electrode and the negative electrode face each other via the separator by folding and laminating the separators.

The separator 130 that insulates the positive electrode 110 and the negative electrode 120 may be formed of an insulating member laminated on the electrode. The insulating member is bonded to the positive electrode 110 or the negative electrode 120. The insulating member preferably has heat resistance. For example, ceramics is used as the insulating member. Such a configuration corresponds to a so-called separatorless configuration. In addition to the separator 130, an insulating member may be used, that is, both the separator 130 and the insulating member may be used.

The lithium ion secondary battery 1 is not limited to a configuration in which the charge/discharge body 100 is sealed by the case 201 and the lid 202. For example, the lithium ion secondary battery 1 may be configured by sealing the charge/discharge body 100 with a laminate film.

The lithium ion secondary battery 1 is not limited to a configuration in which a liquid electrolyte is used. For example, the lithium ion secondary battery 1 may be configured as an all-solid-state secondary battery.

Further, the battery according to the embodiment may be a battery including a solid electrolyte as an electrolyte, and may include a positive electrode, a negative electrode, and a solid electrolyte layer including the solid electrolyte, and a charge/discharge body in which the solid electrolyte layer is interposed between the positive electrode and the negative electrode. For example, each of the positive electrode electronic insulation layer and the negative electrode electronic insulation layer includes a solid electrolyte. Both of the positive electrode electronic insulation particles and the negative electrode electronic insulation particles are solid electrolyte particles.

The battery including such a solid electrolyte does not need to include an electrolyte solution, and thus can have high safety.

Examples of solid electrolytes include sulphide-based solid electrolytes, such as Li₁₀GeP₂S₁₂, Li₆PS₅Cl and Li₂S-P₂S₅ glasses, Li₂S-SiS₂ glasses, Li₂S-P₂S₅-GeS₂ glasses, Li₂S-B₂S₃ glasses, oxide-based solid electrolytes, such as Li₇La₃Zr₂O₁₂, LiLaTiO₃, LiTi(PO₄)₃, LiGe(PO₄)₃ and complex hydride solid electrolytes, such as LiBH₄-LiI, LiBH₄-LiNH₂, and mixtures of two or more of these.

The battery including the negative electrode of another example according to the embodiment may be a battery further including a positive electrode electronic insulation layer provided on the positive electrode and a negative electrode electronic insulation layer provided on the negative electrode, instead of the separator.

### (Configuration of Separatorless Battery Including Negative Electrode of Another Example According to Embodiment)

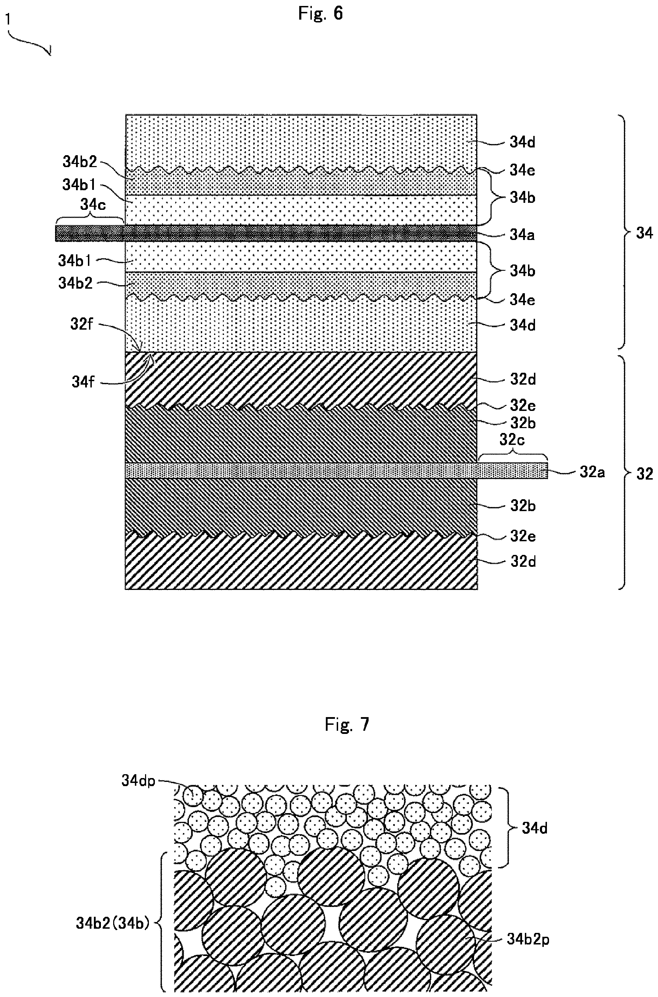

Hereinafter, a configuration of such a separatorless battery will be described with reference to Figures 6 and 7.

As shown in Figure 6, in a separatorless battery 1 (a lithium ion secondary battery) including a positive electrode 34 and a negative electrode 32 according to another embodiment, the positive electrode 34 includes a positive electrode current collector 34a, a positive electrode first active material layer 34b1 bonded to both surfaces of the positive electrode current collector 34a, a positive electrode second active material layer 34b2 bonded to each of the positive electrode first active material layer 34b1, and a positive electrode electronic insulation layer 34d bonded to each of the positive electrode second active material layer 34b2. The negative electrode 32 includes a negative electrode current collector 32a, a negative electrode active material layer 32b bonded to both surfaces of the negative electrode current collector 32a, and a negative electrode electronic insulation layer 32d bonded to each of the negative electrode active material layers 32b.

One end of the positive electrode current collector 34a is provided with a portion 34c (hereinafter referred to as "positive electrode current collector exposed portion") that is not covered with either the positive electrode active material layer 34b including the positive electrode first active material layer 34b1 and the positive electrode second active material layer 34b2, or the positive electrode electronic insulation layer 34d. The positive electrode current collector exposed portion 34c is provided on the end face of the wound group (not shown) and in the vicinity thereof. The positive electrode current collector exposed portion 34c faces and is electrically connected to a positive connection end (not shown) of a positive electrode current collector plate (not shown). Similarly, one end of the negative electrode current collector 32a is provided with a portion 32c (hereinafter referred to as "negative electrode current collector exposed portion") that is not covered with either the negative electrode active material layer 32b or the negative electrode electronic insulation layer 32d. The negative electrode current collector exposed portion 32c is provided on the end face of the wound group and in the vicinity thereof. The negative electrode current collector exposed portion 32c faces and is electrically connected to a negative connection end (not shown) of a negative electrode current collector plate (not shown).

The positive electrode electronic insulation layer 34d and the negative electrode electronic insulation layer 32d have a function of preventing a short circuit between the positive electrode active material layer 34b and the negative electrode active material layer 32b, and a function of conducting ions between the positive electrode active material layer 34b and the negative electrode active material layer 32b. The positive electrode electronic insulation layer 34d and the negative electrode electronic insulation layer 32d may be a porous layer made of a material having an electrically insulating (i.e., electronically insulating and ionically insulating). The porous layer can retain the electrolyte in the pores thereof, and can conduct ions between the positive electrode active material layer 34b and the negative electrode active material layer 32b through the electrolyte.

The positive electrode electronic insulation layer 34d and the negative electrode electronic insulation layer 32d that is porous may also have a function of buffering expansion and contraction of the electrode mixture layer 34b, 32b caused by charging and discharging of the lithium ion secondary battery. The expansion and contraction of the negative electrode active material layer 32b with the charging and discharging of the battery 1 is generally larger than the expansion and contraction of the positive electrode active material layer 34b. Therefore, the negative electrode electronic insulation layer 32d may have an average pore diameter larger than the average pore diameter of the positive electrode electronic insulation layer 34d so that the expansion and contraction of the larger negative electrode active material layer 32b can be buffered. In the present application, the average pore diameter of the positive electrode electronic insulation layer 34d and the negative electrode electronic insulation layer 32d means an average volumetric pore diameter measured by a mercury intrusion porosimetry.

The sum of Na and Fe contents of the positive electrode electronic insulation layer 34d and the negative electrode electronic insulation layer 32d may be 300 ppm or less based on the weights of the positive electrode electronic insulation layer 34d and the negative electrode electronic insulation layer 32d. The amounts of the respective elements contained in the positive electrode electronic insulation layer 34d and the negative electrode electronic insulation layer 32d can be measured by an ICP (Inductive Coupled Plasma) method.

The positive electrode electronic insulation layer 34d may include positive electrode electronic insulation particles, and the negative electrode electronic insulation layer 32d may include negative electrode electronic insulation particles. Hereinafter, the positive electrode electronic insulation particles and the negative electrode electronic insulation particles are collectively referred to as electronic insulation particles as appropriate. The electronic insulation particles may be electrical insulation particles. Examples of the electrical insulation particles include ceramic particles. The ceramic particles may contain at least one selected from the group consisting of alumina (Al₂O₃), boehmite (Al₂O₃ hydrate), magnesia (MgO), zirconia (ZrO₂), titania (TiO₂), iron oxide, silica (SiO₂), and barium titanate (BaTiO₂), and preferably contain at least one selected from the group consisting of alumina, boehmite, magnesia, zirconia, and titania. The electronic insulation particles may have an average particle diameter in the range of 0.7 µm to 1.1 µm. The average particle diameter of the electronic insulation particles can be obtained by calculating the arithmetic average of the projected area circle equivalent diameters of the 100 or more electronic insulation particles selected at random based on the microscopic observation images of the positive electrode electronic insulation layer 34d and the negative electrode electronic insulation layer 32d. The electronic insulation particles may contain at least one of Na of 100 ppm to 200 ppm, Fe of 50 ppm to 100 ppm or Ca of 50 ppm to 100 ppm, based on the weight of the electronic insulation particles.

The positive electrode electronic insulation layer 34d and the negative electrode electronic insulation layer 32d may further include a binder. The binder may be dispersed or dissolved in an aqueous solvent or a nonaqueous solvent (e.g., N-methyl-2-pyrrolidone (NMP)), and may contain, for example, at least one selected from the group consisting of polyvinylidene fluoride (PVDF), polytetrafluoroethylene (PTFE), polyacrylic acid (PAA), and carboxymethylcellulose (CMC).

The positive electrode electronic insulation layer 34d and the negative electrode electronic insulation layer 32d may further include a dispersant. The dispersant may contain at least one selected from the group consisting of a carboxylic acid compound and a phosphoric acid compound.

The interface 34e between the positive electrode electronic insulation layer 34d and the positive electrode active material layer 34b has an uneven configuration, and the uneven height thereof is 2 µm or more, preferably 2 µm to 4 µm. The interface 32e between the negative electrode electronic insulation layer 32d and the negative electrode active material layer 32b has an uneven configuration, and the uneven height thereof is 2 µm or more, preferably 2 µm to 4 µm. The adhesion between the positive electrode electronic insulation layer 34d and the positive electrode active material layer 34b and the adhesion between the negative electrode electronic insulation layer 32b and the negative electrode active material layer 32d and between the negative electrode electronic insulation layer 32d and the negative electrode active material layer 32b can be improved because the uneven height of the interface 32e between the positive electrode electronic insulation layer 34d and the positive electrode active material layer 34b is 2 µm or more. Accordingly, it is possible to prevent or reduce the separation of the positive electrode electronic insulation layer 34d and the negative electrode electronic insulation layer 32d from the positive electrode active material layer 34b and the negative electrode active material layer 32b, respectively, and to improve the reliability of the lithium ion secondary battery.

The uneven height of the interface 34e between the positive electrode second active material layer 34b2 (positive electrode active material layer 34b) and the positive electrode electronic insulation layer 34d can be controlled by, for example, the particle diameters of the positive electrode active material particles and the positive electrode electronic insulation particles. As shown in Figure 7, when the average particle diameter of the positive electrode second active material particle 34b2p (positive electrode second active material) included in the positive electrode second active material layer 34b2 is larger than the average particle diameter of the positive electrode electronic insulation particles 34dp, the positive electrode electronic insulation particles 34dp enters the gap between the positive electrode first active material 34b1p, and the interface 34e between the positive electrode active material layer 34b and the positive electrode electronic insulation layer 34d becomes uneven. For example, by using a spherical positive electrode first active material 34b1p having an average particle diameter in the range of 4.5 µm to 5.5 µm and positive electrode electronic insulation particles 34dp having an average particle diameter in the range of 0.7 µm to 1.1 µm, the uneven height of the interface 34e between the positive electrode active material layer 34b and the positive electrode electronic insulation layer 34d can be set to 2 µm or more, preferably 2 to 4 µm.

Similarly, the uneven height of the interface 32e between the negative electrode active material layer 32b and the negative electrode electronic insulation layer 32d can be controlled by the particle diameters of the negative electrode active material particles and the negative electrode electronic insulation particles. For example, by using scaly negative electrode active material particles having an average particle diameter in the range of 9 µm to 11 µm and negative electrode electronic insulation particles having an average particle diameter in the range of 0.7 µm to 1.1 µm, the uneven height of the interface 32e between the negative electrode active material layer 32b and the negative electrode electronic insulation layer 32d can be set to 2 µm or more, preferably 2 µm to 4 µm.

In the present application, the interface 34e between the positive electrode electronic insulation layer 34d and the positive electrode active material layer 34b and the uneven height of the interface 32e between the negative electrode active material layer 32b and the negative electrode electronic insulation layer 32d are measured as follows. A scanning electron microscopy (SEM) obtains cross-sectional SEM images of any three positions of the positive electrode 34 or the negative electrode 32. And distances from any ten or more points on the interface 34e, 32e to a predetermined reference plane are measured (for example, distances from any ten or more points on the interface 34e, 32e to the surface 34f of the positive electrode electronic insulation layer 34d, distances from 32f of the negative electrode electronic insulation layer 32d, that is, thicknesses of the positive electrode electronic insulation layer 34d and thicknesses of the negative electrode electronic insulation layer 32d at any ten or more points) in each of the cross-sectional SEM images. A standard deviation of the obtained distance values is defined as the uneven height of the interface 34e, 32e. In addition, the surface 34f of the positive electrode electronic insulation layer 34d and the surface 32f of the negative electrode electronic insulation layer 32d are surfaces facing each other, and may be sufficiently flat as compared with the interface 34e, 32e. For example, the uneven height of the front surface 34f, 32f of the positive electrode electronic insulation layer 34d and the negative electrode electronic insulation layer 32d may be 1/10 or less of the uneven height of the interface 34e, 32e.

The phrase "the interface 34d between the positive electrode electronic insulation layer 34b and the positive electrode active material layer 34e has an uneven configuration" may be replaced with "a positive electrode mixed layer including the positive electrode active material and the electronic insulation material between the positive electrode electronic insulation layer 34d and the positive electrode active material layer 34b." Similarly, the phrase "the interface 32d between the negative electrode electronic insulation layer 32b and the negative electrode active material layer 32e has an uneven configuration" can be referred to as "a negative electrode mixed layer including the negative electrode active material and the electronic insulation material between the negative electrode electronic insulation layer 32d and the negative electrode active material layer 32b." The thickness of the positive electrode mixed layer is 2 µm or more, preferably in the range of 2 µm to 4 µm. The thickness of the negative electrode mixed layer is 2 µm or more, preferably in the range of 2 µm to 4 µm. The thickness of the positive electrode mixed layer and the negative electrode mixed layer can be measured in the same manner as the uneven height of the interface 34e, 32e between the positive electrode electronic insulation layer 34d and the negative electrode electronic insulation layer 32d and the electrode mixture layer 34b, 32b described above.

The positive electrode electronic insulation layer 34d and the negative electrode electronic insulation layer 32d may be contacted with each other. Preferably, the positive electrode electronic insulation layer 34d and the negative electrode electronic insulation layer 32d may be contacted with each other without being fixed. Since the positive electrode electronic insulation layer 34d and the negative electrode electronic insulation layer 32d are not fixed to each other, stresses caused by expansion and contraction of the negative electrode active material layer 32b and the positive electrode active material layer 34b due to charge and discharge of the lithium ion secondary battery can be relaxed, and dendrites that can cause a short circuit between the positive electrode active material layer 34b and the negative electrode active material layer 32b can be prevented or reduced from growing through the positive electrode electronic insulation layer 34d and the negative electrode electronic insulation layer 32d.

The peel strength of the positive electrode electronic insulation layer 34d with respect to the positive electrode active material layer 34b and the peel strength of the negative electrode electronic insulation layer 32d with respect to the negative electrode active material layer 32b may be higher than the peel strength of the positive electrode electronic insulation layer 34d with respect to the negative electrode electronic insulation layer 32d. The peel strength can be measured, for example, by a 180° tape peel test according to JIS C 0806-3 1999.

The uneven height of the interface 34e between the positive electrode active material layer 34b and the positive electrode electronic insulation layer 34d can be controlled by the types and viscosities etc. of the solvents of the positive electrode mixture slurry and the positive electrode electronic insulation material slurry in addition to the particle diameters of the positive electrode active material particles and the positive electrode electronic insulation particles described above. Similarly, the uneven height of the interface 32e between the negative electrode active material layer 32b and the negative electrode electronic insulation layer 32d can also be controlled by the type and viscosities etc. of the solvents of the negative electrode mixture slurry and the negative electrode electronic insulation material slurry.

The average pore diameters of the positive electrode electronic insulation layer 34d and the negative electrode electronic insulation layer 32d can be controlled by the particle diameter of the electronic insulation particles, the press pressure in the press processing etc. Specifically, the higher the pressing pressure, the smaller the average pore diameter, and the smaller the particle diameter of the electronic insulation particles, the smaller the average pore diameter.

In the separatorless battery 1 including the positive electrode 34 and the negative electrode 32 of the other example described above, since the strength of the electronic insulation layer is higher than that of the separator, the effect of improving the safety of the battery is obtained.

### (Modified Example)

Further, in a modified example of the separatorless battery 1 including the positive electrode 34 and the negative electrode 32 of the other example described above, each of the positive electrode electronic insulation layer 34d and the negative electrode electronic insulation layer 32d is a layer including a solid electrolyte (that is, an electronically insulating and ionically conductive material). The battery (lithium ion secondary battery) of this modified example does not need to include an electrolyte solution, and thus can have high safety. In this modified example, the electronic insulation particles included in the positive electrode electronic insulation layer 34d and the negative electrode electronic insulation layer 32d may be solid electrolyte particles. Since the solid electrolyte can be satisfactorily formed by press molding, in this case, it is not essential that the positive electrode electronic insulation layer 34d and the negative electrode electronic insulation layer 32d contain a binder and a dispersant.

Further, at least one of the positive electrode first active material layer 34b1 and the positive electrode second active material layer 34b2 included in the positive electrode active material layer 34b may further contain a solid electrolyte in addition to the active material and an optional binder, a conductive auxiliary agent, and a dispersant. Accordingly, the ionic conductivity of at least one of the positive electrode first active material layer 34b1 and the positive electrode second active material layer 34b2 can be improved.

The negative electrode active material layer 32b may further contain a solid electrolyte in addition to the electrode active material and an optional binder, a conductive auxiliary agent, and a dispersant. Accordingly, the ionic conductivity of the negative electrode active material 32b can be improved.

In the battery 1 of the modified example described above, since it is not necessary to include an electrolyte solution and the strength of the electronic insulation layer is higher than that of the separator, it is possible to have high safety.

The battery 1 includes a positive electrode including a positive electrode current collector, a positive electrode mixture layer provided on the positive electrode current collector, and a positive electrode electronic insulation layer provided on the positive electrode mixture layer, a negative electrode including a negative electrode current collector, a negative electrode mixture layer provided on the negative electrode current collector, and a negative electrode including a negative electrode electronic insulation layer provided on the negative electrode mixture layer, and the positive electrode electronic insulation layer and the negative electrode electronic insulation layer are in contact with each other. Further, the positive electrode electronic insulation layer and the negative electrode electronic insulation layer are in contact with each other without being fixed.

### (Method for Manufacturing Separatorless Battery Including Negative Electrode of Another Example According to Embodiment)

Such a separatorless battery can be manufactured using a technique known in the technical field of the present disclosure except for the manufacturing method of the negative electrode of another example according to the embodiment.

In another example of the negative electrode according to the embodiment, for example, the negative electrode first active material layer, the negative electrode second active material layer, and the negative electrode electronic insulation layer of the negative electrode active material layer can be manufactured by simultaneous coating as follows.

First, materials (for example, a negative electrode active material, a conductive auxiliary agent, a binder, or the like) included in the negative electrode first active material layer are prepared. These materials are mixed and the resulting mixture is dispersed in a solvent (e.g., N-methyl-2-pyrrolidone (NMP) and/or water) to obtain a negative electrode first slurry. Further, materials (for example, a negative electrode active material, a conductive auxiliary agent, a binder, or the like) included in the negative electrode second active material layer are prepared. These materials are mixed and the resulting mixture is dispersed in a solvent (e.g., N-methyl-2-pyrrolidone (NMP) and/or water) to obtain a negative electrode second slurry. Further, materials (for example, negative electrode electronic insulation particles, a binder, a dispersant, and the like) included in the negative electrode electronic insulation layer are prepared. These materials are mixed and the resulting mixture is dispersed in a solvent (e.g., N-methyl-2-pyrrolidone (NMP) and/or water) to obtain a negative electrode electronic insulator slurry.

Next, the negative electrode first slurry, the negative electrode second slurry, and the negative electrode electronic insulation material slurry are simultaneously coated on the negative electrode current collector. As a result, the negative electrode second slurry layer, the negative electrode first slurry layer, and the negative electrode electronic insulation material slurry layer are formed. Next, the solvent contained in the negative electrode second slurry layer, the negative electrode first slurry layer, and the negative electrode electronic insulation material slurry layer is volatilized by a drying furnace etc., and the negative electrode second slurry layer, the negative electrode first slurry layer, and the negative electrode electronic insulation material slurry layer are dried. As a result, the negative electrode first active material layer, the negative electrode second active material layer, and the negative electrode electronic insulation layer are formed on one surface of the negative electrode current collector. Next, the negative electrode current collector, the negative electrode first active material layer, the negative electrode second active material layer, and the negative electrode electronic insulation layer are pressed. Specifically, a laminate including a negative electrode current collector, a negative electrode first active material layer, a negative electrode second active material layer, and a negative electrode electronic insulation layer is sandwiched between rollers heated to 60 to 120 °C and subjected to pressure. Thereafter, the laminate is slit to a predetermined width. Thereby, a negative electrode is obtained.

In the above battery 1 including the negative electrode manufactured by the manufacturing method in which three layers are simultaneously coated, since it is not necessary to include an electrolytic solution, and the battery is firmly adhered to each other because it has unevenness at the interface of each layer, high safety and reliability can be obtained. In particular, it is preferable that the interface 1 between the negative electrode insulating layer and the negative electrode second active material layer and the interface 2 between the negative electrode second active material layer and the first active material layer have a larger unevenness than the surface of the negative electrode electronic insulation layer facing the roller, since a stable ion conductivity can be obtained. It is preferable from the viewpoint that the difference between the unevenness of the interface 1 and the unevenness of the interface 2 is smaller than the difference between the unevenness of the surface and the unevenness of the interface 2.

### Reference Signs List

- 1: battery,
- 100: charge/discharge body,
- 110: positive electrode,
- 111: positive electrode current collector layer,
- 111a: current collector,
- 111b: positive electrode tab,
- 111c: side edge,
- 112: positive electrode active material layer,
- 120: negative electrode,
- 121: negative electrode collector layer (current collector layer),
- 121a: current collector,
- 121b: negative electrode tab,
- 121c: side edge,
- 122: negative electrode first active material layer (first active material layer),
- 122a: first graphite,
- 122b: first silicon simple substance or silicon compound,
- 122c: first binder (binder),
- 123: negative electrode second active material layer (second active material layer),
- 123a: second graphite,
- 123b: second silicon simple substance or silicon compound,
- 123c: second binder (binder),
- 130: separator,
- 200: container,
- 201: case,
- 202: lid,
- 300: external terminal,
- 301: positive electrode terminal,
- 302: negative electrode terminal,
- X: lateral width direction of the battery 1,
- Y: depth direction of the battery 1,
- Z: height direction of the battery 1.

## Claims

1. A negative electrode comprising:
a current collector layer;
a first active material layer bonded to the current collector layer; and
a second active material layer bonded to the first active material layer,
wherein the first active material layer includes a first graphite, and a first silicon simple substance or silicon compound of 1 wt% or more and 90 wt% or less with respect to the total weight of the first active material layer,
and the second active material layer includes a second graphite having an average particle diameter smaller than the first graphite, and a second silicon simple substance or silicon compound of 0 wt% or more and less than 1 wt% with respect to the total weight of the second active material layer.

2. The negative electrode according to claim 1,
wherein the average particle diameter of the first graphite is 10 µm or more and 35 µm or less,
and the average particle diameter of the second graphite is 2 µm or more and 15 µm or less.

3. The negative electrode according to claim 1,
wherein the second active material layer further includes at least one selected from the group consisting of an easily graphitizable carbon, a hardly graphitizable carbon, an amorphous carbon, and a low crystalline carbon.

4. The negative electrode according to claim 1,
wherein the first active material layer further includes at least one binder selected from the group consisting of rubber-based, acrylic-based, polyamideimide, and polyimide.

5. The negative electrode according to claim 1,
wherein the current collector layer has a tensile strength of 40 kg/mm² or higher.

6. A battery comprising:
a negative electrode including a current collector layer, a first active material layer bonded to the current collector layer, and a second active material layer bonded to the first active material layer, in which the first active material layer includes a first graphite, a first silicon simple substance or silicon compound of 1 wt% or more and 90 wt% or less with respect to the total weight of the first active material layer, and the second active material layer includes a second graphite having an average particle diameter smaller than the first graphite, and a second silicon simple substance or silicon compound having an average particle diameter of 0 % or more and less than 1 wt% with respect to the total weight of the second active material layer;
a positive electrode; and
an electrolyte.
